# FASCICULE DE BREVET EUROPEEN

(11) **EP 1 779 351 B1**
(45) Date de publication et mention de la délivrance du brevet: **03.03.2010**
(21) Numéro de dépôt: 05769047.1
(22) Date de dépôt: 03.08.2005
(51) Int. Cl.: G08C 19/30, H02P 7/00

(54) **ACTIONNEUR ELECTRIQUE DE VOLET ROULANT AVEC INTERFACE DE COMMANDE A CONTACTS ELECTRIQUES A OUVERTURE**
BETÄTIGUNGSGLIED FÜR EINEN ELEKTRISCHEN ROLLADEN MIT STEUERSCHNITTSTELLE MIT ELEKTRISCHEN UNTERBRECHERKONTAKTEN
ELECTRIC ROLLER-SHUTTER ACTUATOR COMPRISING A CONTROL INTERFACE WITH ELECTRIC BREAK CONTACTS

(30) Priorité: 10.08.2004 FR 0408800
(43) Date de publication de la demande: 02.05.2007
(73) Titulaire: Somfy SAS, 74300 Cluses (FR)
(72) Inventeur: GREHANT, Bernard, F-74440 TANINGES (FR); CLABAUT, Muriel, F-74300 CLUSES (FR)
(74) Mandataire: Bugnion Genève
(86) Numéro de dépôt international: PCT/IB2005/002302
(87) Numéro de publication internationale: WO 2006/016243

(56) Documents cités:
- EP-A- 0 672 912
- EP-A- 0 895 211
- WO-A-2004/025867
- FR-A- 2 562 736
- US-A- 4 134 050

## Description

L'invention concerne un dispositif d'actionneur défini selon le préambule de la revendication 1.

Il est connu d'alimenter un actionneur grâce à une source d'énergie électrique telle que par exemple le secteur alternatif 230V par le biais d'une interface de commande reliée au moyen de fils à l'actionneur.

Un tel actionneur permet dans une installation domotique de manoeuvrer un écran mobile par exemple de fermeture, d'occultation ou de protection solaire auquel il est mécaniquement lié. Pour commander les déplacements de cet écran, un utilisateur exerce des actions sur l'interface de commande au moyen de touches de commande associées aux déplacements de l'écran. Les ordres de commande de l'écran sont transmis à l'actionneur au moyen des fils reliant l'interface de commande et l'actionneur.

Dans une telle architecture, il suffit de relier l'interface de commande à l'actionneur au moyen d'un câble à trois conducteurs : un conducteur de phase permettant d'alimenter l'actionneur pour le faire tourner dans un premier sens, un conducteur de phase permettant d'alimenter l'actionneur pour le faire tourner dans un deuxième sens et un conducteur de neutre.

Avec un tel dispositif, une action de l'utilisateur sur une première touche permet de relier le conducteur de phase du secteur au conducteur de phase permettant d'alimenter l'actionneur pour le faire tourner dans un premier sens et une action de l'utilisateur sur une deuxième touche permet de relier le conducteur de phase du secteur au conducteur de phase permettant d'alimenter l'actionneur pour le faire tourner dans un deuxième sens.

L'inconvénient majeur engendré par un tel dispositif est l'absence d'alimentation de l'actionneur lorsqu'aucune action n'est exercée sur les touches de l'interface de commande. En effet, du fait de cette absence d'alimentation, certains capteurs intégrés ne peuvent fonctionner en dehors d'un mouvement commandé de l'actionneur. De même, certaines ergonomies particulières d'actions sur les touches de commandes permettant de configurer ou de régler le dispositif ne peuvent pas être mises en oeuvre. C'est le cas par exemple d'ergonomies dans lesquelles l'actionneur doit mesurer des durées pendant lesquelles aucune action n'est exercée sur les touches de l'interface de commande.

On connaît des demandes EP 0 895 211 et WO 2004/025867 des dispositifs dans lesquels l'alimentation de l'actionneur via l'interface de commande est permanente et indépendante de l'état des touches de commandes. Cependant, les structures des interfaces de commande sont complexes et nécessitent différents composants électroniques autres que de simples interrupteurs. Ces interfaces modifient la tension d'alimentation de l'actionneur en supprimant certaines de ses alternances.

Le but de l'invention est de fournir un dispositif de manoeuvre d'écran palliant aux inconvénients cités et améliorant les dispositifs connus de l'art antérieur. En particulier l'invention propose un dispositif de manoeuvre d'écran dans lequel l'interface de commande a une structure très simple.

Le dispositif d'actionneur selon l'invention est caractérisé par la partie caractérisante de la revendication 1.

Différents modes de réalisation du dispositif d'actionneur sont définis par les revendications dépendantes 2 à 6.

Le dessin annexé représente, à titre d'exemple, un mode de réalisation du dispositif d'actionneur selon l'invention.

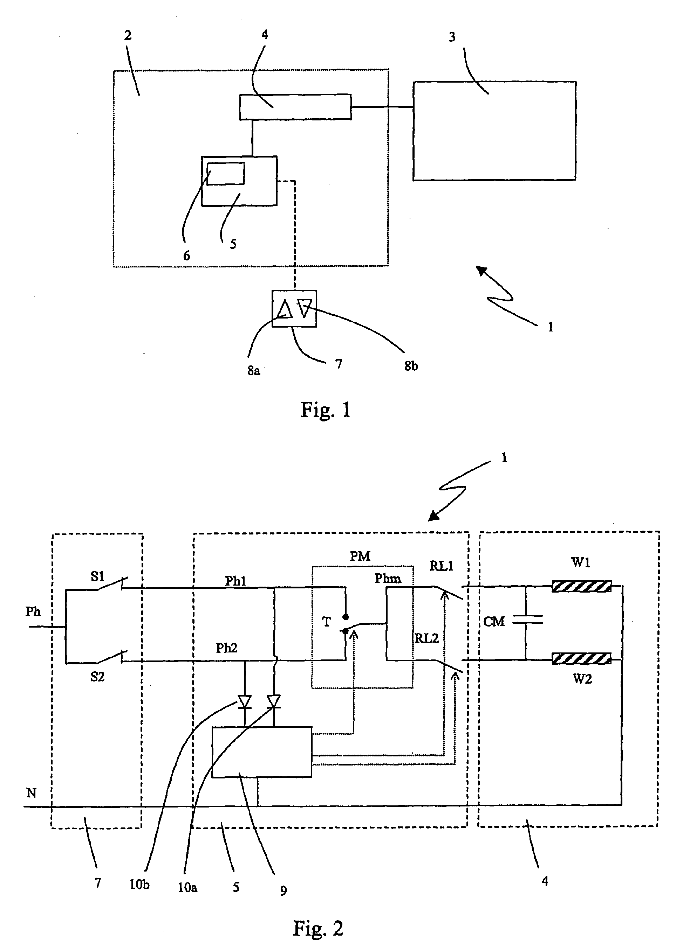

La figure 1 et la figure 2 sont des schémas d'un mode de réalisation du dispositif d'actionnement selon l'invention.

Un dispositif d'actionneur 1 est représenté de manière schématique à la figure 1. Il comprend principalement une interface de commande 7 et une unité d'actionnement 2 comprenant une unité électronique de commande et un moteur 4. L'unité d'actionnement est liée mécaniquement, éventuellement par le biais d'un réducteur, à un élément mobile 3 de fermeture d'occultation ou de protection solaire ou à un écran de projection afin d'entraîner le déplacement de celui-ci. L'élément mobile 3 peut notamment consister en un volet roulant, en un store ou en une porte. L'unité électronique de commande 5 est liée au moteur 4, elle assure le pilotage des mouvements de celui-ci par le biais de son alimentation. L'unité électronique de commande comprend une mémoire 6, et a en outre pour fonction de déterminer la position dans laquelle l'élément mobile 3 se trouve à chaque instant. L'unité d'actionnement peut comprendre à cet effet un dispositif de comptage associé à un capteur de type à effet Hall ou de type optoélectronique par exemple.

Pour permettre à un utilisateur de commander les mouvements de l'élément mobile, celui-ci dispose d'une interface de commande 7. Cette interface a la forme d'un boîtier muni de deux touches de commande. Dans un mode de commande du dispositif d'actionnement, une touche 8a permet de commander le mouvement de l'élément mobile dans un premier sens, par exemple la montée, et une touche 8b permet de commander le mouvement de l'élément mobile dans un deuxième sens, par exemple la descente.

Un appui sur l'une des touches de commande provoque en effet l'envoi d'un ordre de commande vers l'unité électronique de commande, qui pilote en conséquence une rotation du moteur dans le sens correspondant à l'ordre de commande et finalement le déplacement de l'élément mobile 3.

L'interface de commande 7 est reliée à une source de tension électrique, telle que le secteur alternatif 230 Volts, au moyen de deux fils. Elle est également reliée par l'intermédiaire de trois fils à l'unité d'actionnement et plus particulièrement à l'unité électronique de commande 5. Ces fils permettent de transmettre à l'unité d'actionnement non seulement des ordres de commande mais également l'énergie électrique nécessaire à l'alimentation de l'unité électronique de commande 5 et du moteur 4.

Le dispositif d'actionnement est représenté de manière plus détaillée à la figure 2.

L'interface de commande 7 est reliée à la source de tension électrique par deux fils Ph et N. Sur le fil Ph portant la phase lorsque l'interface de commande est reliée à une source de tension alternative, deux contacts à ouverture S1 et S2 sont branchés en parallèle. Ils sont reliés mécaniquement aux touches 8a ou 8b et sont, au repos, normalement fermés. En aval, ces contacts S1 et S2 sont respectivement connectés à deux fils conducteurs Ph1 et Ph2 reliés à l'unité électronique de commande 5. Un fil N portant le neutre lorsque l'interface de commande est reliée à une source de tension alternative, traverse l'interface de commande et est connecté à l'unité électronique de commande. Un appui sur la touche 8a provoque l'ouverture du contact S1 et un appui sur la touche 8b l'ouverture du contact S2. On remarque que malgré un appui sur l'une des touches de commande l'unité électronique de commande est toujours alimentée par le biais du contact lié à l'autre touche de commande. Seul un appui sur l'ensemble des touches de l'interface de commande coupe l'alimentation électrique de l'unité électronique de commande.

L'unité électronique de commande 5 comprend principalement un microcontrôleur 9. Il est alimenté à travers des dispositifs de redressement et de régulation 10a, 10b par les tensions existant entre le fil N et l'un des deux fils Ph1 et Ph2 attaquant l'unité électronique.

Les deux fils Ph1 et Ph2 attaquant l'unité électronique peuvent être connectés alternativement à un fil d'alimentation Phm du moteur grâce à un module de gestion de l'alimentation PM comprenant un relais bistable T. Ce fil Phm peut alimenter via un interrupteur commandé RL1 un premier bobinage W1 du moteur en parallèle avec un montage en série d'un deuxième bobinage W2 du moteur et d'un condensateur CM pour faire tourner le moteur dans un premier sens et peut alimenter via un interrupteur commandé RL2 le deuxième bobinage W2 du moteur en parallèle avec un montage en série du premier bobinage W1 du moteur et du condensateur CM pour faire tourner le moteur dans un deuxième sens. Les interrupteurs commandés RL1 et RL2 peuvent être constitués de transistors de puissance ou de relais. Les états du relais bistable T et des interrupteurs commandés RL1 et RL2 sont commandés par des sorties du microcontrôleur 9.

Le microcontrôleur comprend des moyens (par exemple des comparateurs) pour déterminer par quel fil il est alimenté. En fonction de cette information, il commande par l'intermédiaire de ses sorties les états du relais bistable T et des interrupteurs commandés RL1 et RL2.

Pour expliquer le fonctionnement du dispositif d'actionnement, on suppose qu'à un état initial celui-ci est placé dans un mode de commande, que les deux contacts S1 et S2 sont au repos et que le relais bistable T est dans une position connectant les fils Ph1 et Phm. Un appui sur la touche 8a provoque l'ouverture du contact S1. Cette ouverture est détectée par le microcontrôleur 9, celui-ci n'étant plus alimenté que par le fil Ph2. Le microcontrôleur commande alors de positionner le relais T dans un état connectant les fils Ph2 et Phm (parmi les fils Ph1 et Ph2 seul le fil Ph2 étant alimenté) et de fermer l'interrupteur RL1 pour alimenter le moteur pour le faire tourner dans un premier sens. Un second appui sur la touche 8a commande l'ouverture de l'interrupteur commandé RL1 et par conséquent l'arrêt du moteur. Un appui sur la touche 8b provoque l'ouverture du contact S2. Cette ouverture est détectée par le microcontrôleur 9, celui-ci n'étant plus alimenté que par le fil Ph1. Le microcontrôleur commande alors de positionner le relais T dans un état connectant les fils Ph1 et Phm (parmi les fils Ph1 et Ph2, seul le fil Ph1 étant alimenté) et de fermer l'interrupteur RL2 pour alimenter le moteur pour le faire tourner dans un deuxième sens. Un second appui sur la touche 8b commande l'ouverture de l'interrupteur commandé RL2 et par conséquent l'arrêt du moteur. Un nouvel appui sur une des touches est par conséquent interprété différemment selon que l'actionneur est en mouvement ou non.

La fonction d'arrêt de l'alimentation du moteur peut également être réalisée par l'action de l'utilisateur sur une touche particulière ou par le retour au repos des touches commandant l'alimentation du moteur. Compte tenu de l'état normalement fermé des contacts S1 et S2, l'unité électronique de commande continue d'être alimentée, par l'intermédiaire d'un des fils (Ph1 ou Ph2) lorsque l'un des contacts S1 et S2 est ouvert.

Dans le cas où les deux contacts S1 et S2 sont ouverts simultanément (appui simultané de l'utilisateur sur les deux touches de commande 8a et 8b), l'unité électronique de commande 5 n'est plus alimentée. Ce double appui peut être évité en utilisant un dispositif à exclusion mécanique interdisant l'appui simultané sur les deux touches ou en réalisant les deux touches au moyen d'un inverseur à bascule. Dans les cas où l'appui simultané sur les deux touches de commande devrait être autorisé (pour réaliser une fonction d'arrêt du moteur par exemple), il peut être prévu une alimentation de secours de l'unité électronique de commande. Cette alimentation de secours peut consister, par exemple, en un condensateur monté entre les bornes d'alimentation du microcontrôleur. Ceci peut par exemple permettre au microcontrôleur de mesurer des durées pendant lesquelles les deux touches 8a et 8b sont activées simultanément, une telle mesure pouvant être nécessaire dans certaines ergonomies, en particulier dans certaines ergonomies de configuration de l'actionneur.

L'interface de commande et l'unité électronique de commande peuvent permettre l'alimentation de plusieurs moteurs, si une configuration particulière des commandes est générée, suivant par exemple les enseignements des demandes EP 0 895 211 et WO 2004/025867.

Un dispositif d'actionneur selon l'invention est très simple, adapté à la commande d'un élément mobile et à différentes solutions de configuration de la course de celui-ci, ces solutions utilisant des séquences d'appuis sur les touches de commande.

L'alimentation permanente de l'électronique pourrait également être mise à profit dans une installation où l'unité électronique dispose également de moyens de réception de messages non filaires. Le dispositif pourrait ainsi répondre par exemple à une commande générale radio ou à un ordre d'un capteur de vent également émis par le biais d'ondes radioélectriques.

L'unité électronique de commande 5 peut également être reliée à des capteurs intégrés à l'unité d'entraînement. Ce sont par exemple des dispositifs de détection de mouvements non commandés de l'écran, par exemple dus au vent ou à des tentatives d'intrusion. Dans le cas de l'invention, la lecture de ces capteurs est rendue possible par l'alimentation permanente de l'électronique de commande.

Avantageusement, l'unité électronique pourrait être configurée de manière à répondre aux différentes sollicitations d'interfaces de commande à contacts à ouverture ou à contacts à fermeture. Ainsi, l'unité d'actionnement 2 pourrait être installée avec l'un ou l'autre des points de commande disponible en fonction de l'installation prévue.

A l'installation, l'une ou l'autre des configurations pourrait être sélectionnée automatiquement suite à une étape de détection d'alimentation permanente pendant un temps donné sur les deux lignes de phase pour déterminer si l'interface de commande présente une interface de commande à contacts à ouverture.

En dehors des périodes de sollicitations du moteur, l'électronique peut être mise en veille pour optimiser la consommation électrique.

## Revendications

1. Dispositif d'actionneur (1) permettant la manoeuvre d'un élément mobile (3) de fermeture, d'occultation, de protection solaire ou d'un écran de projection, comprenant une interface utilisateur de commande (7) reliée à une source d'énergie électrique (Ph, N), munie d'au moins deux contacts branchés (S1, S2) ayant une borne commune reliée à la source d'énergie électrique et permettant l'alimentation d'un moteur (4) et d'une unité électronique de commande (5), le moteur (4) étant alimenté via l'unité électronique de commande (5), **caractérisé en ce que** les contacts (S1, S2) de l'interface utilisateur (7) sont des contacts à ouverture permettant l'alimentation permanente de l'unité électronique de commande (5) lorsqu'au moins l'un d'eux est au repos.

2. Dispositif d'actionneur (1) selon la revendication précédente, **caractérisé en ce que** l'unité électronique de commande (5) comprend un microcontrôleur (9) dont des sorties commandent les états de moyens d'interruption (T, RL1, RL2) pilotant l'alimentation du moteur (4).

3. Dispositif d'actionneur (1) selon l'une des revendications précédentes, **caractérisé en ce que** l'unité électronique de commande (5) comprend un module (PM) de gestion de l'alimentation du moteur (4).

4. Dispositif d'actionneur (1) selon la revendication 3, **caractérisé en ce que** le module (PM) de gestion de l'alimentation du moteur comprend un relais bistable (T) piloté en fonction de l'état des contacts (S1, S2) de l'interface de commande (7).

5. Dispositif d'actionneur (1) selon l'une des revendications précédentes, **caractérisé en ce que** l'unité électronique de commande (5) comprend des moyens (9) pour distinguer des séquences particulières d'ouverture et/ou de fermeture des contacts (S1, S2) de l'interface de commande (7) pour gérer des modes de fonctionnement particuliers.

6. Dispositif d'actionneur (1) selon l'une des revendications 2 à 5, **caractérisé en ce que** l'unité électronique de commande (5) comprend deux interrupteurs commandés (RL1, RL2) branchés en parallèle, ces interrupteurs étant branchés en série avec un relais bistable permettant de relier alternativement lesdits interrupteurs (RL1, RL2) à un conducteur de phase (Ph) par l'intermédiaire de l'un ou de l'autre des contacts (S1, S2).

## Claims

1. Actuating device (1), allowing the operation of a movable element (3) for closing, privacy or solar protection, or of a projection screen, comprising a user control interface (7) that is connected to a source of electric energy (Ph, N) equipped with at least two switched contacts (S1, S2) having a common terminal connected to the source of electric energy and allowing the power supply of a motor (4) and of an electronic control unit (5), the motor (4) being supplied via the electronic control unit (5),
**characterised in that** the contacts (S1, S2) of the user control interface (7) are break contacts allowing a permanent power supply of the electronic control unit (5) when at least one of the contacts is at rest.

2. Actuating device (1) according to the preceding claim, **characterised in that** the electronic control unit (5) comprises a microcontroller (9) whose outputs control the state of switching means (T, RL1, RL2) that control the power supply of the motor (4).

3. Actuating device (1) according to any one of the preceding claims, **characterised in that** the electronic control unit (5) comprises a module (PM) for managing the power supply of the motor (4).

4. Actuating device (1) according to claim 3, **characterised in that** the module (PM) for managing the power supply of the motor comprises a bistable relay (T) driven as a function of the state of the contacts (S1, S2) of the control interface (7).

5. Actuating device (1) according to any one of the preceding claims, **characterised in that** the electronic control unit (5) comprises means (9) for distinguishing particular sequences of the opening and/or the closing of the contacts (S1, S2) of the control interface (7) in order to manage particular operating modes.

6. Actuating device (1) according to any one of the claims 2 through 5, **characterised in that** the electronic control unit (5) comprises two controlled switches (RL1, RL2) connected in parallel to each other and connected in series with a bistable relay allowing the connection of said switches (RL1, RL2) alternatively with a phase line (Ph) through one or the other of the contacts (S1, S2).

## Patentansprüche

1. Betätigungsglied (1) zur Betätigung eines beweglichen Elements (3) zum Schliessen, zur Abdunkelung oder zum Sonnenschutz, oder zur Betätigung eines Projektionsschirms, wobei das Betätigungsglied eine Steuerschnittstelle (7) für den Benutzer aufweist, welche mit einer Quelle elektrischer Energie (Ph, N) verbunden ist und mindestens zwei Betriebskontakte (S1, S2) mit einem gemeinsamen Anschluss enthält, der mit der Quelle elektrischer Energie verbunden ist, wobei die Betriebskontakte die Speisung eines Motors (4) und einer elektronischen Steuereinheit (5) ermöglichen, und wobei der Motor (4) über die elektronische Steuereinheit (5) mit Energie versorgt wird,
**dadurch gekennzeichnet, dass** die Kontakte (S1, S2) der Steuerschnittstelle (7) Ruhekontakte sind, welche die dauernde Speisung der elektronischen Steuereinheit (5) ermöglichen, wenn zumindest einer der Kontakte geschlossen ist.

2. Betätigungsglied (1) nach vorstehendem Anspruch, **dadurch gekennzeichnet, dass** die elektronische Steuereinheit (5) einen Mikrokontrolleur (9) aufweist, dessen Ausgänge die Zustände von Schaltmitteln (T, RL1, RL2) beeinflussen, welche die Speisung des Motors (4) steuern.

3. Betätigungsglied (1) nach einem der vorstehenden Ansprüche, **dadurch gekennzeichnet, dass** die elektronische Steuereinheit (5) ein Modul (PM) zur Steuerung der Speisung des Motors (4) aufweist.

4. Betätigungsglied (1) nach Anspruch 3, **dadurch gekennzeichnet, dass** das Modul (PM) zur Steuerung der Speisung des Motors ein bistabiles Relais (T) aufweist, das in Abhängigkeit vom Zustand der Kontakte (S1, S2) der Steuerschnittstelle (7) geschaltet wird.

5. Betätigungsglied (1) nach einem der vorstehenden Ansprüche, **dadurch gekennzeichnet, dass** die elektronische Steuereinheit (5) Mittel (9) zur Unterscheidung besonderer Sequenzen des Öffnens und/oder des Schliessens der Kontakte (S1, S2) der Steuerschnittstelle (7) aufweist, wodurch besondere Funktionsmodi gesteuert werden.

6. Betätigungsglied (1) nach einem der Ansprüche 2 bis 5, **dadurch gekennzeichnet, dass** die elektronische Steuereinheit (5) zwei gesteuerte Schalter (RL1, RL2) aufweist, die miteinander parallel geschaltet sind, wobei diese Schalter mit einem bistabilen Relais in Reihe geschaltet sind, welches die alternative Verbindung der genannten Schalter (RL1, RL2) über den einen oder den anderen der Kontakte (S1, S2) mit einem Phasenleiter (Ph) ermöglicht.
